Europäisches Patentamt

European Patent Office

Office européen des brevets

(19)

(11) **EP 0 785 635 B1**

(12) **FASCICULE DE BREVET EUROPEEN**

(45) Date de publication et mention
de la délivrance du brevet:
**06.05.2004   Bulletin 2004/19**

(51) Int Cl.$^7$: **H04B 1/713**

(21) Numéro de dépôt: **96402893.0**

(22) Date de dépôt: **26.12.1996**

(54) **Procédé et dispositif de transmission avec diversité de fréquence utilisant une pluralité de porteuses non corrélées**

Verfahren und Anordnung zur Übertragung mit Frequenzdiversity unter Verwendung von mehreren unkorrelierten Trägern

Method and apparatus for frequency diversity transmission using a plurality of uncorrelated carriers

(84) Etats contractants désignés:
**DE FR GB IT**

(30) Priorité:  **29.12.1995  FR 9515741**

(43) Date de publication de la demande:
**23.07.1997   Bulletin 1997/30**

(73) Titulaire: **THOMSON multimedia**
**92648 Boulogne Cédex (FR)**

(72) Inventeurs:
• **Harrison, David**
**92050 Paris la Defense Cedex (FR)**
• **Louzir, Ali**
**92050 Paris la Defense Cedex (FR)**
• **Haquet, Gérard**
**92050 Paris la Defense Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**FR-A- 2 573 594          GB-A- 2 132 451**
**US-A- 5 084 901**

## Description

La présente invention se rapporte au domaine des transmissions sans fil et concerne particulièrement un procédé de diversité de fréquence permettant de réaliser un étalement du spectre d'une porteuse SHF modulée (Super High Frequency en langue anglaise), de fréquence $f_p$, destinée à transporter une information entre un émetteur et au moins un récepteur. Cet étalement du spectre est réalisé de façon connue en soi, par variation continue de la fréquence $f_p$ dans une bande déterminée de manière à transmettre, entre un émetteur et au moins un récepteur, un signal dont le spectre comporte une pluralité de fréquences représentant une pluralité de porteuses non corrélées.

L'invention concerne également un émetteur destiné à mettre en oeuvre le procédé objet de l'invention.

Dans les procédés de transmission sans fil connus, basés sur une modulation d'une porteuse SHF, les signaux transmis par l'émetteur atteignent le récepteur selon une pluralité de trajets distincts. Il en résulte au niveau du récepteur des interférences susceptibles de provoquer des évanouissements du signal transmis et par conséquent une perte ou une dégradation de l'information à transmettre.

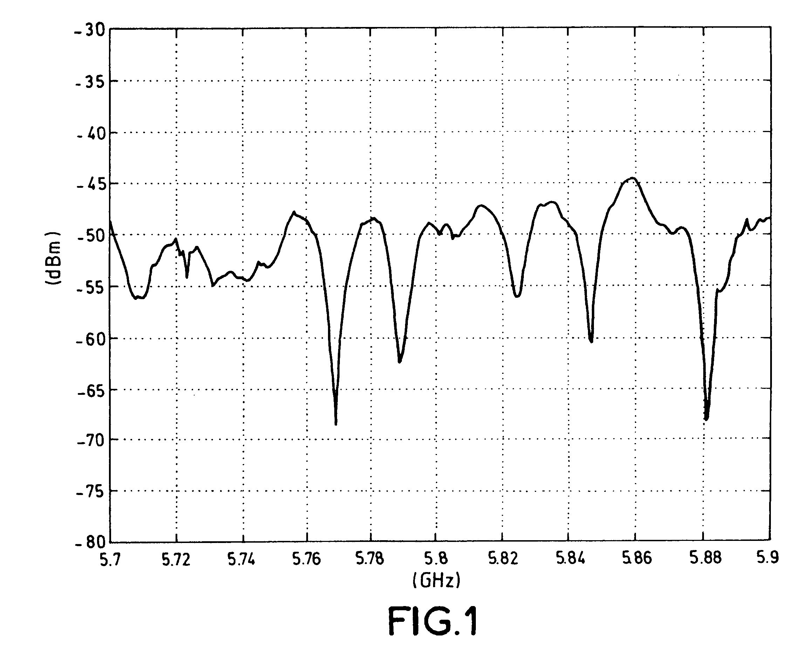

La figure 1 illustre un exemple d'évolution de la puissance reçue par un récepteur selon un procédé de l'art antérieur dans une bande de fréquence s'étendant de 5,7 GHz à 5,9 GHz. Comme on peut le voir sur cette figure, la courbe de puissance présente plusieurs chutes brutales se traduisant par des coupures ou des dégradations de la liaison émetteur-récepteur. Les fréquences correspondants aux minima de puissance varient selon la position spatiale du récepteur, et pour une position donnée, le niveau de puissance peut changer dans le temps en fonction de l'environnement qui peut être modifié par le mouvement des personnes par exemple. De telles coupures ou dégradations sont inacceptables dans des applications telles que la transmission de son entre un appareil de télévision et des haut-parleurs par exemple.

Les solutions utilisées dans l'art antérieur pour résoudre ce problème sont généralement basées sur des techniques telles que la diversité spatiale ou la diversité de fréquences. La diversité spatiale consiste à utiliser une antenne de transmission et une pluralité d'antennes de réception espacées de manière à décorréler les signaux reçus. Outre la multiplication du nombre d'antennes de réception utilisées, cette technique nécessite l'utilisation d'un dispositif complexe de combinaisons des signaux reçus par les différentes antennes.

La technique basée sur la diversité de fréquences classiques consiste à utiliser un émetteur séparé pour chaque fréquence porteuse. D'autre part une bonne stabilité de chacune des sources de fréquence est souvent nécessaire. Enfin, afin d'éviter l'évanouissement simultané des différentes porteuses, la largeur de la bande de fréquence séparant lesdites porteuses doit être supérieure ou égale à la largeur de la bande de cohérence du canal sans fil utilisé. En effet, à l'intérieur de la bande de cohérence, les signaux reçus sont très fortement corrélés, et l'efficacité de la diversité de fréquences classiques est très fortement réduite. Or, la largeur de la bande de cohérence dépend de l'environnement dans lequel se fait la transmission des signaux SHF. Aussi, la diversité de fréquences classiques utilisées dans un environnement donné n'est pas toujours adaptée à un environnement différent.

La demande de brevet GB-A-2132451 décrit une méthode de transmission à diversité de fréquence dans laquelle un signal d'information module en fréquence une porteuse dont le fréquence est variée de manière continue.

Le but de l'invention est de pallier les inconvénients de l'art antérieur. Selon le procédé de l'invention, on module en amplitude la porteuse SHF par une porteuse VHF de fréquence $f_{AM}$, préalablement modulée en fréquence par un signal $S_1$ représentant l'information à transmettre, et simultanément on commande les variations de la fréquence $f_p$ par un signal sinusoïdal $S_c$ de fréquence $f_{FM}$. L'invention est plus précisément définie dans le jeu de revendications annexées.

Grâce à ce procédé, la puissance reçue par le récepteur est équivalente à la moyenne des puissances reçues via les différentes porteuses du spectre étalé sur la bande B. Ainsi, le niveau du signal reçu est maintenu relativement constant évitant des évanouissements brutaux dus aux interférences résultant du caractère multiple des trajets des signaux émis dans la gamme SHF.

Le procédé selon l'invention est mis en oeuvre au moyen d'un émetteur comportant trois étages montés en cascade, soit un étage RF (radiofréquence) d'amplification/filtrage du signal S1, un étage VHF de modulation en fréquence de la porteuse VHF et un étage SHF de modulation en amplitude et en fréquence de la porteuse SHF.

D'autres caractéristiques et avantages de l'invention ressortiront de la description qui va suivre, prise à titre d'exemple non limitatif, en référence aux figures annexées dans lesquelles :

- la figure 1 représente une courbe de variations de la puissance reçue par un récepteur selon un procédé de transmission sans fil de l'art antérieur ;
- la figure 2 représente un spectre étalé d'un signal transmis selon un procédé conforme à l'invention ;

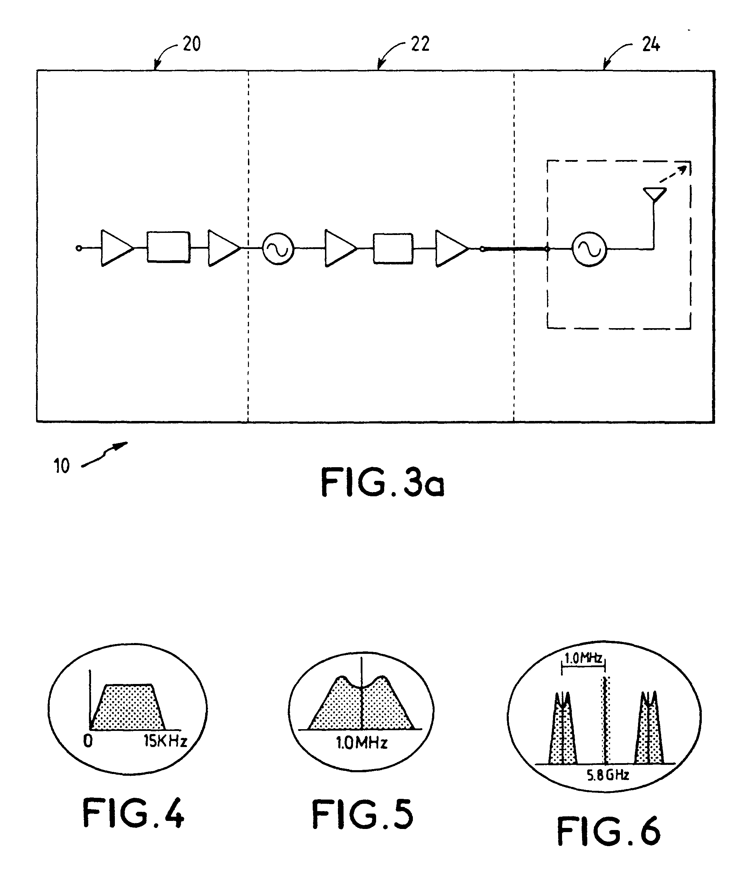

- la figure 3a représente schématiquement un émetteur destiné à mettre en oeuvre un procédé conforme à l'invention ;
- la figure 3b représente schématiquement un récepteur associé à l'émetteur de la figure 3a ;
- la figure 4 représente un spectre d'un signal audio transmis au moyen d'un procédé et d'un émetteur selon l'invention ;

- la figure 5 représente un spectre d'une première porteuse modulée par le signal dont le spectre est représenté à la figure 4 ;

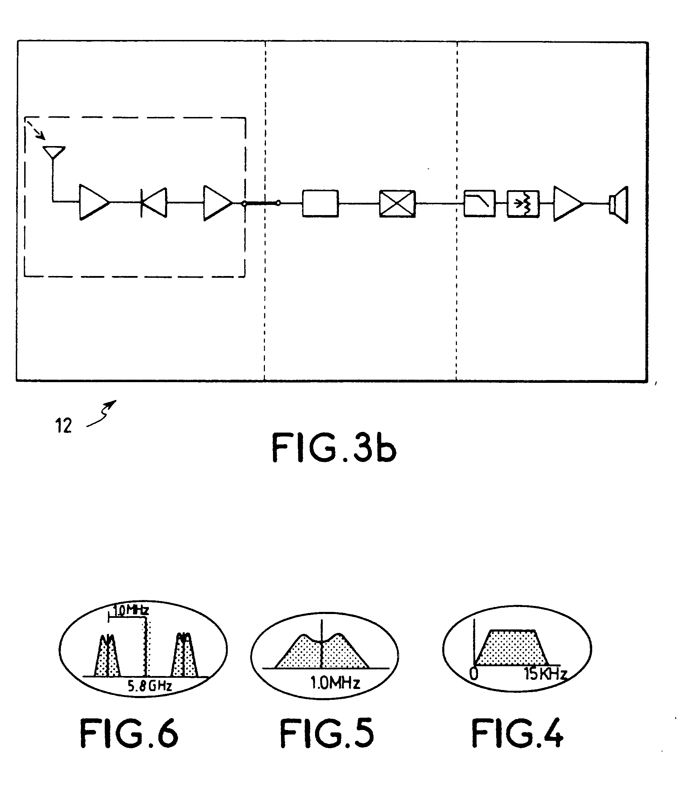

- la figure 6 représente un spectre d'une deuxième porteuse modulée par la première porteuse dont le spectre est représenté à la figure 5 ;
- la figure 7 représente un étage SHF de l'émetteur représenté à la figure 3a ;
- la figure 8 illustre schématiquement un exemple d'environnement d'utilisation d'un procédé selon l'invention ;
- la figure 9 représente schématiquement un transistor et son circuit de polarisation, utilisé dans l'étage SHF de la figure 7 ;
- la figure 10 représente un exemple de modulation de la tension de polarisation du transistor de la figure 9 ;
- la figure 11 représente les caractéristiques en courant-tension du transistor de la figure 9 ;
- les figures 12 et 13 représentent deux exemples de courants délivrés par le transistor de la figure 9.
- la figure 14 représente un signal modulé en amplitude obtenu par un mode préféré de réalisation de l'émetteur selon l'invention.

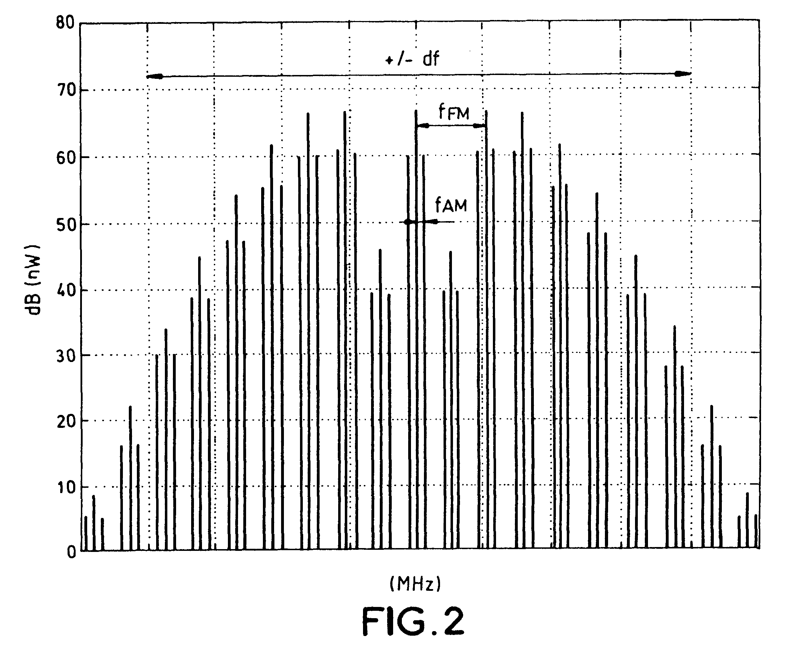

La figure 2 illustre un exemple de spectre étalé d'une porteuse SHF de fréquence $f_p$ transmise entre un émetteur 10 et un récepteur 12 selon un procédé de diversité de fréquence caractérisé en ce que l'on varie de façon continue la fréquence fp de la porteuse SHF dans une bande B déterminée de manière à transmettre au récepteur 12 un signal ayant un spectre comportant une pluralité de fréquences représentant une pluralité de porteuses non corrélées transportant chacune l'information à transmettre.

Selon un mode de réalisation préféré du procédé de l'invention, on module en amplitude la porteuse SHF par une porteuse VHF (very high frequency en langue anglaise) de fréquence $f_{AM}$, préalablement modulée en fréquence par un signal S1 représentant l'information à transmettre, et simultanément, on commande les variations de la fréquence $f_p$ de la porteuse SHF, par un signal sinusoïdal Sc de fréquence $f_{FM}$ choisie préférentiellement égale à $f_{AM}$, de manière à réaliser une modulation en fréquence de ladite porteuse SHF.

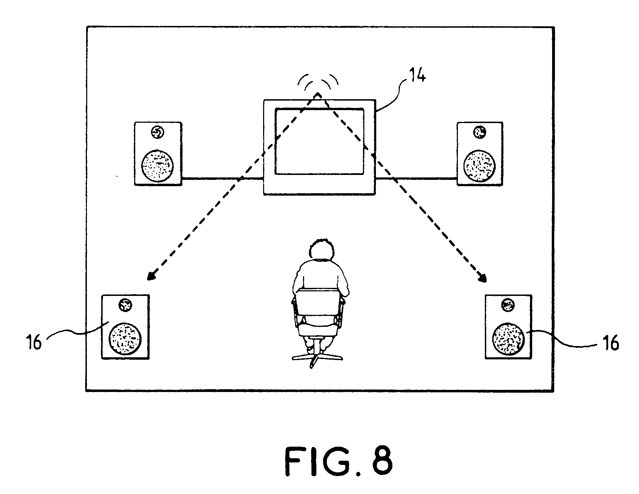

Dans un exemple particulier d'application de l'invention illustré à la figure 8, le signal S1 représente un signal audio émis par un émetteur agencé dans un appareil de télévision 14 vers au moins deux récepteurs agencés chacun dans un haut-parleur 16 situé à distance dudit appareil de télévision 14. Dans cet exemple d'application, le signal Sc et la porteuse VHF sont identiques et sont générés par une même source, et le signal audio S1 module en fréquence ladite porteuse VHF de fréquence $f_{AM}$ = 1 MHz, qui module ensuite, simultanément en amplitude et en fréquence, une porteuse SHF de fréquence $f_p$ = 5,8 GHz.

Des mesures effectuées dans l'environnement schématisé à la figure 8 montrent que dans une bande B= ± 40 MHz autour de la fréquence fp = 5,8 GHz et pour $f_{AM}$ = $f_{FM}$ = 1 MHz, on limite notablement, d'une part, les inter-modulations entre la porteuse VHF et le signal Sc, et d'autre part, les pertes par distorsion du signal transmis.

Selon un mode préféré de réalisation, l'émetteur 10 mettant en oeuvre le procédé de l'invention comporte trois étages montés en cascade, soit un étage RF (radiofréquence) 20 d'amplification/filtrage du signal S1, un étage VHF 22 de modulation en fréquence de la porteuse VHF et un étage SHF 24 de modulation en amplitude et en fréquence de la porteuse SHF.

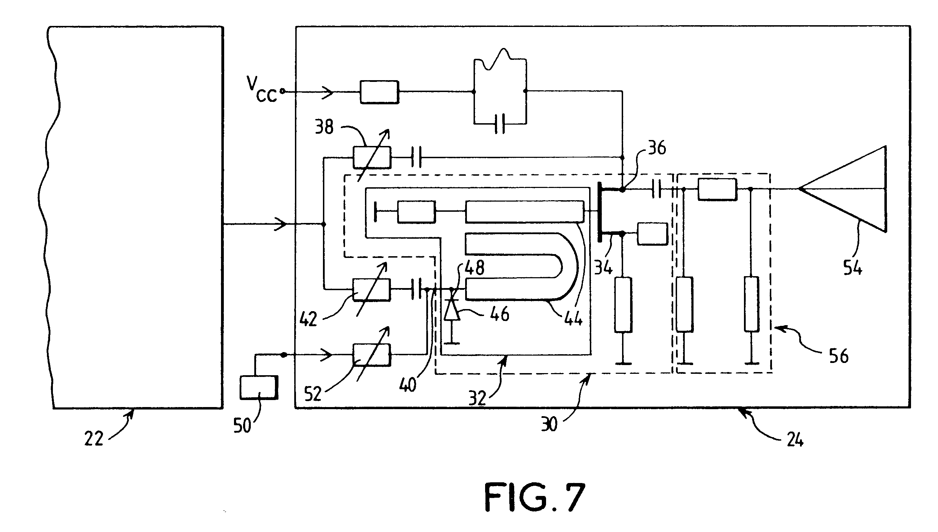

Comme on peut le voir sur la figure 7, l'étage SHF 24 comporte un module oscillateur 30 destiné a générer la porteuse SHF et comportant un circuit résonant 32 associé à un transistor 34 du type FET (Field Effect Transistor en langue anglaise). Le drain 36 dudit transistor 34 est relié , d'une part, à une source de tension continue Vcc, et d'autre part, à l'étage VHF 22 via un premier moyen de réglage 38 de l'amplitude de la porteuse VHF. Une entrée 40 de l'oscillateur 30 est reliée à un deuxième moyen de réglage 42 permettant de sélectionner l'excursion en fréquence, dans la bande B, de la porteuse SHF modulée en fréquence et en amplitude. Le circuit résonant 32 comporte un résonateur microbande 44 relié à une diode à capacité variable 46 dont l'anode 48 est polarisée par une source de tension continue 50 via un troisième moyen de réglage 52 permettant, d'une part, de régler la largeur de la bande B, et d'autre part, de compenser les dérives en fréquence de l'oscillateur 30. Le transistor 34 est relié à une antenne d'émission 54 via un étage atténuateur 56.

En superposant le signal Sc à la tension continue de polarisation de la diode 46, on produit des variations continues de la fréquence de résonance du circuit résonant 32, et partant, des variations de la fréquence d'oscillation du module oscillateur 30.

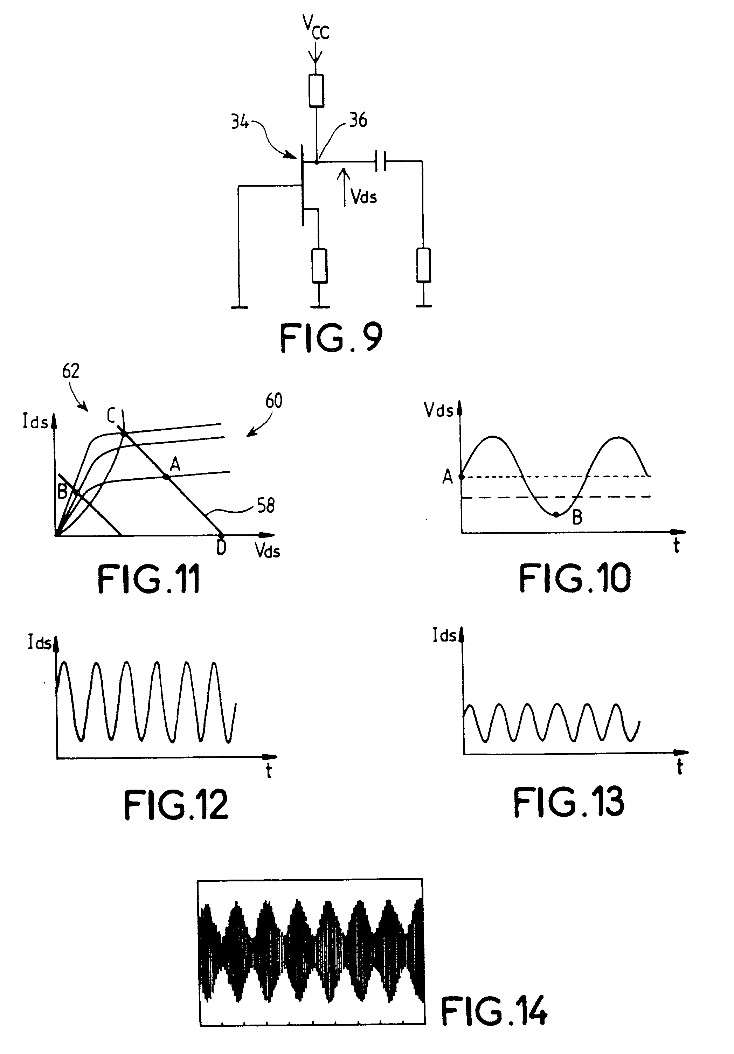

La figure 11 représente les caractéristiques en courant-tension du transistor 34 travaillant en mode grands signaux. L'amplitude de la porteuse SHF générée par l'oscillateur 30 est limitée par les non linéarités du transistor aux points C et D se trouvant sur la droite de charge 58 dudit transistor 34. Ainsi, en appliquant la porteuse VHF sur le drain 36 du transistor 34, la tension de polarisation dudit drain 36 est modifiée périodiquement comme cela est illustré sur la figure 10. Ceci se traduit par un déplacement du point de polarisation du transistor 34 de sa zone de fonctionnement en saturation 60 vers sa zone de fonctionnement linéaire 62, comme cela est illustré par les points A et B sur la figure 11. La figure 12 illustre le cas ou le point de polarisation A est dans la zone 60 permettant d'obtenir un courant de drain dont l'amplitude est maximum, tandis que la figure 13 illustre le cas ou le point de polarisation est dans la zone 62 provoquant une diminution de l'amplitude dudit courant de drain. Comme cela a été dit précédemment, la modulation d'amplitude de la dite porteuse SHF, illustrée par la figure 14, est obtenue par l'application de la porteuse VHF sur le drain 36 du transistor 34. Le niveau de pénétration du point de polarisation dans la zone de fonctionnement linéaire 62 permet d'ajuster l'indice de modulation d'amplitude de la porteuse SHF. Ledit niveau de pénétration est commandé par le premier moyen de réglage 38 et dépend de l'amplitude de la porteuse VHF.

L'étalement du spectre de fréquence de la porteuse SHF modulée est ajusté par le troisième moyen de réglage 52 permettant de modifier la tension continue de polarisation de la diode à capacité variable 46 produisant ainsi une variation de la valeur de la capacité de ladite diode 46.

L' étage SHF selon l'invention permet, simultanément, de générer la porteuse SHF et de réaliser la modulation en amplitude et la modulation en fréquence de la dite porteuse SHF.

## Revendications

1. Procédé de modulation à étalement de spectre d'une porteuse SHF de fréquence $f_p$ dans une bande B déterminée de manière à transmettre, d'un émetteur (10) vers au moins un récepteur (12), un signal dont le spectre comporte une pluralité de fréquences représentant une pluralité de porteuses non corrélées, **caractérisé en ce que** :

   - on module en fréquence une porteuse VHF de fréquence $F_{AM}$ par un signal $S_1$ représentant une information à transmettre,
   - simultanément, on module en fréquence la porteuse SHF de fréquence $f_p$ par un signal sinusoïdal $S_c$ de fréquence $f_{FM}$,
   - on module en amplitude la porteuse SHF ainsi modulée à l'aide de la porteuse VHF ainsi modulée, la modulation en amplitude étant effectuée après les modulations en fréquence des porteuses SHF et VHF.

2. Procédé selon la revendication 1, **caractérisé en ce que** le signal $S_1$ représente un signal audio de télévision.

3. Procédé selon la revendication 1, **caractérisé en ce que** le signal $S_c$ et la porteuse VHF sont générés par la même source et,

$$f_p = 5{,}8 \text{ GHz et } f_{AM} = f_{FM} = 1 \text{ MHz.}$$

4. Procédé selon l'une des revendications 1 à 3, **caractérisé en ce que** la bande de fréquence B s'étend de $\pm$ 40 MHz autour de la fréquence $f_p = 5{,}8$ GHz.

5. Emetteur destiné à mettre en oeuvre le procédé selon l'une des revendications 1 à 4, **caractérisé en ce qu'**il comporte :

   - un étage VHF (22) de modulation en fréquence d'une porteuse VHF par un signal $S_1$, représentant une information à transmettre
   - un étage SHF (24) de modulation en amplitude et en fréquence d'une porteuse SHF, la modulation en fréquence se faisant à l'aide d'un signal sinusoïdal de modulation de fréquence ($S_c$) et la modulation en amplitude se faisant à l'aide de la porteuse VHF modulée.

6. Emetteur selon la revendication 5, **caractérisé en ce que** l'étage SHF comporte un module oscillateur (30) comportant un circuit résonnant (32) associé à un transistor (34) du type FET dont le drain (36) est relié, d'une part, à une source de tension continue Vcc, et d'autre part, à l'étage VHF (22) via un premier moyen de réglage (38) de l'amplitude de la porteuse VHF délivrée par ledit étage VHF (22).

7. Emetteur selon la revendication 6, **caractérisé en ce que** le circuit résonnant (32) comporte un résonateur microbande (44) associé à une diode à capacité variable (46) dont l'anode (48) est reliée, d'une part, à une deuxième moyen de réglage (42) permettant de sélectionner l'excursion en fréquence, dans la bande B, de la porteuse SHF modulée en fréquence et en amplitude, et d'autre part, à un troisième moyen de réglage (52) permettant d'une part de régler la largeur de la bande B, et d'autre part, de compenser les dérives en fréquence de l'oscillateur (30).

## Claims

1. Spread spectrum method for modulating an SHF carrier of frequency $f_p$ within a specified band B determined in such a way as to transmit, from a transmitter (10) to at least one receiver (12), a signal whose spectrum includes a plurality of frequencies representing a plurality of uncorrelated carriers, **characterized in** the that:

   - a VHF carrier of frequency $F_{AM}$ is frequency-modulated by a signal $S_1$ representing an item of information to be transmitted,
   - simultaneously, the SHF carrier of frequency $f_p$ is frequency-modulated by a sinusoidal signal $S_c$ of frequency $f_{FM}$,
   - the thus-modulated SHF carrier is amplitude-modulated with the aid of the thus-modulated VHF carrier, the amplitude modulation being performed after the frequency modulations of the SHF and VHF carriers.

**2.** Method according to Claim 1, **characterized in that** the signal $S_1$ represents a television audio signal.

**3.** Method according to Claim 1, **characterized in that** the signal $S_c$ and the VHF carrier are generated by the same source and,

$$f_p = 5.8 \text{ GHz and } f_{AM} = f_{FM} = 1 \text{ MHz.}$$

**4.** Method according to one of Claims 1 to 3, **characterized in that** the frequency band B extends $\pm$ 40 MHz about the frequency $f_p$ = 5.8 GHz.

**5.** Transmitter intended to implement the method according to one of Claims 1 to 4, **characterized in that** it includes:

- a VHF stage (22) for frequency-modulating a VHF carrier by a signal $S_1$, representing an item of information to be transmitted,
- an SHF stage (24) for amplitude- and frequency-modulating an SHF carrier, the frequency modulation being done with the aid of a sinusoidal frequency modulation signal ($S_c$) and the amplitude modulation being done with the aid of the modulated VHF carrier.

**6.** Transmitter according to Claim 5, **characterized in that** the SHF stage includes an oscillator module (30) including a resonant circuit (32) associated with a transistor (34) of the FET type, the drain (36) of which is linked, on the one hand, to a DC voltage Vcc, and on the other hand, to the VHF stage (22) via a first means of adjustment (38) of the amplitude of the VHF carrier delivered by the said VHF stage (22).

**7.** Transmitter according to Claim 6, **characterized in that** the resonant circuit (32) includes a microstrip resonator (44) associated with a variable-capacitance diode (46) whose anode (48) is linked, on the one hand, to a second means of adjustment (42) making it possible to select the frequency excursion, within the band B, of the frequency-modulated and amplitude-modulated SHF carrier, and on the other hand, to a third means of adjustment (52) making it possible on the one hand to adjust the width of the band B, and on the other hand to compensate for the frequency drifting of the oscillator (30).

**Patentansprüche**

**1.** Verfahren zur Modulation bei der Spektratspreizung eines SHF-Trägers mit der Frequenz $f_p$ in einem Band B zur Übertragung eines Signals, dessen Spektrum mehrere Frequenzen enthält, die mehrere unkorrelierte Träger darstellen, von einem Sender (10) zu wenigstens einem Empfänger (12), **gekennzeichnet durch folgende Schritte:**

- die Frequenz eines VHF-Trägers mit der Frequenz $f_{AM}$ wird **durch** ein Signal $S_1$ moduliert, das eine zu übertragende Information darstellt,
- gleichzeitig erfolgt eine Frequenzmodulation des SHF-Trägers mit der Frequenz $f_p$ **durch** ein sinusförmiges Signal $S_c$ mit der Frequenz $f_{FM}$,
- die Amplitude des derart modulierten SHF-Trägers wird **durch** den derart modulierten VHF-Träger moduliert, wobei die Amplitudenmodulation nach den Frequenzmodulationen des SHF- und VHF-Trägers erfolgt.

**2.** Verfahren nach Anspruch 1, **dadurch gekennzeichnet, dass** das Signal $S_1$ ein Audiofernsehsignal darstellt.

**3.** Verfahren nach Anspruch 1, **dadurch gekennzeichnet, dass** das Signal $S_c$ und der VHF-Träger durch dieselbe Quelle erzeugt werden und $f_p$ = 5,8 GHz und $f_{AM}$ = $f_{FM}$ = 1 MHz ist.

**4.** Verfahren nach einem der Ansprüche 1 bis 3, **dadurch gekennzeichnet, dass** das Frequenzband B sich über $\pm$ 40 MHz um die Frequenz $f_p$ = 5,8 GHz erstreckt.

**5.** Sender zur Durchführung des Verfahrens nach einem der Ansprüche 1 bis 4, **gekennzeichnet durch**

- eine VHF-Stufe (22) zur Frequenzmodulation eines VHF-Trägers **durch** ein Signal $S_1$, das eine zu übertragende Information darstellt,
- eine SHF-Stufe (24) zur Amplituden- und Frequenzmodulation eines SHF-Trägers, wobei die Frequenzmodulation **durch** ein sinusförmiges Signal zur Frequenzmodulation ($S_c$) und die Amplitudenmodulation **durch** den modulierten VHF-Träger erfolgt.

**6.** Sender nach Anspruch 5, **dadurch gekennzeichnet, dass** die SHF-Stufe ein Oszillatormodul (30) mit einer Resonanzschaltung (32) für einen FET-Transistor (34) enthält, dessen Drain (36) einerseits mit einer Gleichspannungsquelle Vcc und andererseits mit der VHF-Stufe (22) über ein erstes Einstellmittel (38) für die Amplitude des durch die VHF-Stufe (22) gelieferten VHF-Trägers erfolgt.

**7.** Sender nach Anspruch 6, **dadurch gekennzeichnet, dass** die Resonanzschaltung (32) einen Mikrostrip-Resonator (44) für eine Kapazitätsdiode (46) enthält, deren Anode (48) einerseits mit einem zweiten Einstellmittel (42) verbunden ist, das die Wahl der Frequenzänderung in dem Band B des frequenz- und amplitudenmodulierten SHF-Trägers ermöglicht und andererseits mit einem dritten Einstellmittel (52) verbunden ist, das einerseits die Einstellung der Bandbreite B und andererseits die Kompensation der Frequenzabweichungen des Oszillators (30) ermöglicht.

FIG.1

7

FIG.2

FIG.3a

FIG.4

FIG.5

FIG.6

12

# FIG.3b

## FIG.6

## FIG.5

## FIG.4

FIG.7

$V_{CC}$

38

36

42

48

46

44

34

40

32

30

52

50

22

54

56

24

EP 0 785 635 B1

FIG. 8

FIG.9

FIG.11

FIG.10

FIG.12

FIG.13

FIG.14